# FASCICULE DE BREVET EUROPEEN

(11) **EP 0 753 450 B1**
(45) Date de publication et mention de la délivrance du brevet: **02.06.1999**
(21) Numéro de dépôt: 96401473.2
(22) Date de dépôt: 03.07.1996
(51) Int. Cl.: B62D 21/15, B62D 25/04

(54) **Dispositif pour la protection d'un occupant d'un véhicule automobile en cas de choc latéral**
Vorrichtung zum Seitenaufprallschutz für Kfz-Insassen
Device for side impact protection of occupants of a motorcar

(30) Priorité: 13.07.1995 FR 9508562
(43) Date de publication de la demande: 15.01.1997
(73) Titulaire: AUTOMOBILES PEUGEOT, 75116 Paris (FR); AUTOMOBILES CITROEN, 92200 Neuilly-sur-Seine (FR)
(72) Inventeur: Vandiere, Aymar, 92100 Boulogne Billancourt (FR)
(74) Mandataire: Thinat, Michel

(56) Documents cités:
- DE-U-29 500 093
- US-A- 5 352 011

## Description

La présente invention concerne un dispositif pour la protection d'un occupant d'un véhicule automobile en cas de choc latéral.

Ce dispositif est conçu de façon à minimiser les lésions produites au corps de l'occupant, notamment le bassin de celui-ci, par un choc latéral.

A cet effet, le dispositif pour la protection d'un occupant d'un véhicule automobile en cas de choc latéral, le véhicule comprenant un panneau de côté recevant l'impact et dont une partie est située au niveau d'une partie prédéterminée du corps de l'occupant (voir DE-U-29500093), est caractérisé en ce qu'il comprend des moyens pour faire pivoter au moins la partie du panneau de côté autour d'un axe sensiblement horizontal au moment du choc.

La partie prédéterminée du corps de l'occupant est une partie résistante de celui-ci, telle que le bassin.

De préférence, l'axe de pivotement est situé dans la zone de liaison entre le panneau de côté et le pavillon du véhicule.

Les moyens de pivotement comprennent des moyens de rigidification du panneau de côté et du pavillon et une liaison souple entre le panneau de côté et le pavillon.

Les moyens de pivotement comprennent en outre une zone de faiblesse dans la structure du véhicule au niveau de la partie inférieure du panneau de côté.

Lorsque le panneau de côté est destiné à recevoir au moins une porte du véhicule, les moyens de rigidification du panneau de côté comprennent au moins un élément de renfort de la porte tel qu'une entretoise ou un cadre rigide.

La ou les portes s'appuient contre un pied central du véhicule et les moyens de rigidification du panneau de côté comprennent un élément de renfort du pied central.

Les moyens de rigidification du pavillon comprennent au moins une traverse liée à celui-ci, l'une des traverses se trouvant au droit du pied central.

La traverse est reliée au pied central par une zone amincie permettant leur pivotement relatif, constituant ainsi la liaison souple entre le panneau de côté et le pavillon.

La zone de faiblesse sus-mentionnée comprend au moins une zone de moindre résistance dans la partie inférieure de l'élément de renfort et cette zone de moindre résistance comprend au moins une découpe ou échancrure dans la partie inférieure de l'élément de renfort.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 représente la structure générale de base du dispositif de l'invention assurant la protection d'un occupant d'un véhicule automobile.

La figure 2 est une vue partielle de côté en perspective d'un véhicule automobile équipé du dispositif de l'invention.

La figure 3 est une vue en coupe suivant la ligne III-III de la figure 2.

La figure 4 est une vue en coupe suivant la ligne IV-IV de la figure 2.

La figure 5 est une vue en coupe suivant la ligne V-V de la figure 2.

La figure 6 est une vue en coupe suivant la ligne VI-VI de la figure 2.

La figure 7 est une vue partielle en perspective suivant la flèche VII de la figure 4.

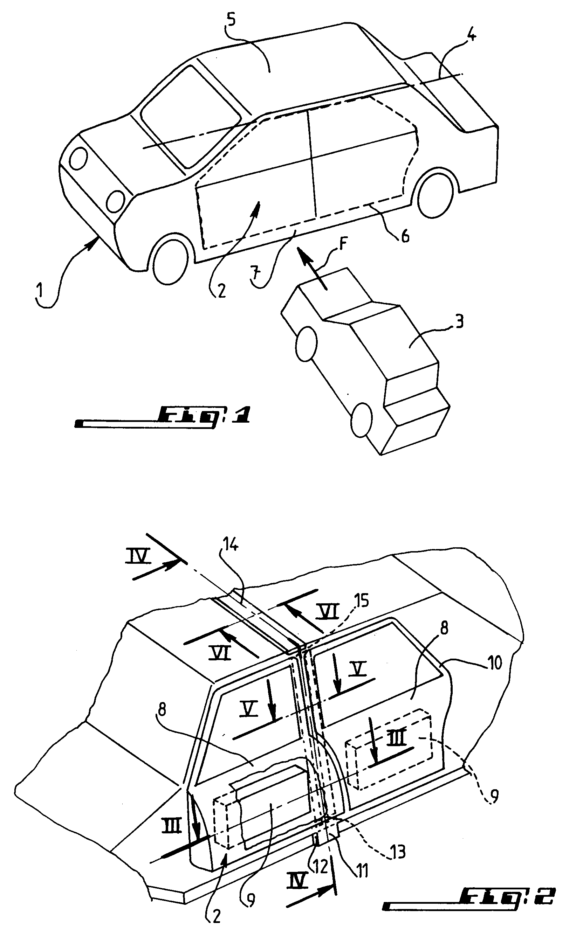

En se reportant à la figure 1, la référence 1 désigne un véhicule automobile comprenant au moins un panneau de côté 2 conçu de façon à assurer la protection d'un des occupants du véhicule en cas de choc latéral par un autre véhicule 3 entrant en collision avec le véhicule 1 suivant le sens transversal indiqué par la flèche F.

Comme représenté, le panneau de côté 2 est utilisé dans sa totalité pour assurer la protection du conducteur ou d'un occupant avant et/ou d'un passager arrière du véhicule 1, mais il est bien entendu qu'une partie seulement de ce panneau peut être utilisée pour protéger un occupant du véhicule 1, par exemple le conducteur. L'essentiel est qu'au moins une partie du panneau de côté 2 soit située au niveau d'une partie prédéterminée résistante du corps de l'occupant du véhicule, notamment le bassin.

Le panneau de côté 2 ou une partie de celui-ci est monté de façon à pouvoir pivoter par des moyens appropriés autour d'un axe de rotation sensiblement horizontal 4 situé dans la zone de liaison entre le pavillon 5 du véhicule et le panneau de côté 2.

Ces moyens de pivotement comprennent des moyens de rigidification du panneau de côté 2 et du pavillon 5 et une liaison souple entre le panneau et le pavillon et qui seront détaillés ultérieurement. Ces moyens de pivotement comprennent en outre une zone de faiblesse 6 réalisée dans la structure du véhicule sur au moins une partie du panneau de côté 2, notamment entre le soubassement 7 du véhicule et la partie inférieure du panneau de côté 2.

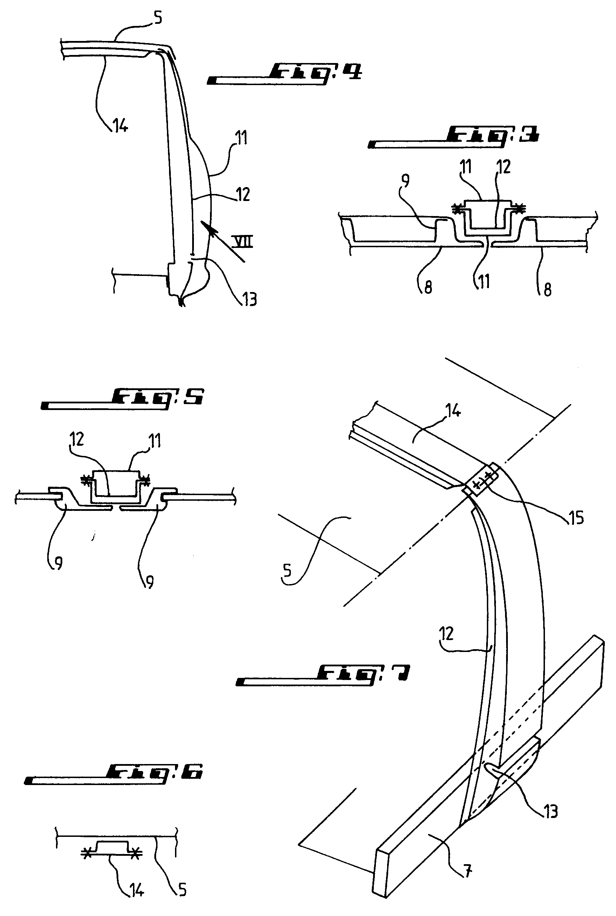

Les figures 2 à 7 représentent un mode de réalisation du dispositif de protection répondant au principe ci-dessus défini.

Comme cela ressort de ces figures, le panneau de côté 2 est destiné à recevoir au moins une porte 8, dans le cas présent deux portes respectivement avant et arrière, et les moyens de rigidification de ce panneau comprennent au moins un élément de renfort interne de chaque porte 8, tel que par exemple une entretoise 9 ou un cadre rigide 10, de réalisation classique et assurant la quasi-non déformabilité de chaque porte 8.

Chaque porte 8 s'appuie contre un pied central 11 du véhicule 1, également de réalisation classique, et renforcé par un élément de renfort 12 d'un seul tenant. Avantageusement, l'élément de renfort 12 est d'inertie régulière sur toute sa hauteur, mais est interrompu par au moins une découpe ou échancrure 13 constituant une zone de moindre résistance et située dans la partie inférieure de l'élément de renfort 12 au niveau de sa liaison avec le soubassement 7 du véhicule. La découpe ou échancrure 13 constitue ainsi le point le plus faible de l'élément de renfort 12.

Les moyens de rigidification du pavillon 5 comprennent au moins une traverse 14, de réalisation classique, solidaire du pavillon 5 au droit du pied central 11. Avantageusement, la traverse 14 est reliée à l'élément de renfort 12 par une zone amincie de liaison à surface plane 15 permettant leur pivotemeent relatif et constituant ainsi la liaison souple entre le panneau 2 et le pavillon 5. La zone amincie 15 constitue l'emplacement où l'inertie de l'ensemble élément de renfort 12 et traverse 14 passe par une valeur nulle.

La réalisation du dispositif de protection ci-dessus décrit permet de contrôler les mouvements des pièces ou éléments de structure de ce dispositif et donc leur déformation lors d'un choc latéral avec pour conséquence que la mise en mouvement de l'occupant est contrôlée et les efforts résultant de ce choc appliqués sur une partie résistante du corps de l'occupant, telle que le bassin, sont également contrôlés et ne sont en tout cas pas appliqués directement sur des zones fragiles du corps humain, minimisant ainsi les lésions produites par le choc latéral.

## Revendications

1. Dispositif pour la protection d'un occupant d'un véhicule automobile en cas de choc latéral, le véhicule comprenant un panneau de côté (2) recevant l'impact et dont une partie est située au niveau d'une partie prédéterminée du corps de l'occupant, caractérisé en ce qu'il comprend des moyens (9, 10, 12, 13, 14, 15) pour faire pivoter au moins ladite partie du panneau de côté (2) autour d'un axe sensiblement horizontal (4) au moment du choc.

2. Dispositif selon la revendication 1, caractérisé en ce que la partie prédéterminée du corps de l'occupant est une partie résistante de celui-ci, telle que le bassin.

3. Dispositif selon la revendication 1 ou 2 caractérisé en ce que l'axe de pivotement (4) précité est situé dans la zone de liaison entre le panneau de côté (2) et le pavillon (5) du véhicule (1).

4. Dispositif selon l'une des revendications précédentes, caractérisé en ce que les moyens de pivotement précités comprennent des moyens de rigidification (9, 14) du panneau de côté (2) et du pavillon (5) et une liaison souple (15) entre le panneau de côté (2) et le pavillon (5).

5. Dispositif selon la revendication 4, caractérisé en ce que les moyens de pivotement précités comprennent en outre une zone de faiblesse (13) dans la structure du véhicule au niveau de la partie inférieure du panneau de côté (2).

6. Dispositif selon l'une des revendications précédentes, caractérisé en ce que le panneau de côté (2) est destiné à recevoir au moins une porte (8) du véhicule (1) et en ce que les moyens de rigidification du panneau de côté (2) comprennent au moins un élément de renfort (9, 10) de la porte (8), tel qu'une entretoise (9) ou un cadre rigide (10).

7. Dispositif selon la revendication 6, caractérisé en ce que la ou les portes (8) s'appuient contre un pied central (11) du véhicule (1) et les moyens de rigidification du panneau de côté (2) comprennent un élément de renfort (12) du pied central (11).

8. Dispositif selon l'une des revendications 4 à 7, caractérisé en ce que les moyens de rigidification du pavillon (5) comprennent au moins une traverse (14) liée à celui-ci.

9. Dispositif selon la revendication 8, caractérisé en ce que l'une des traverses (14) se trouve au droit du pied central(11).

10. Dispositif selon la revendication 9, caractérisé en ce que la traverse (14) est reliée au pied central (11) par une zone amincie (15) permettant leur pivotement relatif, constituant ainsi la liaison entre le panneau de côté (2) et le pavillon (5).

11. Dispositif selon la revendication 5 et l'une des revendications 7 à 10, caractérisé en ce que la zone de faiblesse (13) comprend au moins une zone de moindre résistance (13) dans la partie inférieure de l'élément de renfort (12).

12. Dispositif selon la revendication 11, caractérisé en ce que la zone de moindre résistance comprend au moins une découpe ou échancrure (13) dans la partie inférieure de l'élément de renfort (12).

## Claims

1. Device for the protection of an occupant of an automotive vehicle in case of a side impact, the vehicle comprising a side panel (2) receiving the impact and of which one part is located at the level of one predetermined portion of the body of the occupant, characterized in that it comprises means (9, 10, 12, 13, 14, 15) for pivoting at least the said part of the side panel (2) about a substantially horizontal axis (4) at the time of the impact.

2. Device according to claim 1, characterized in that the predetermined portion of the body of the occupant is a resistant portion of the latter such as the pelvis.

3. Device according to claim 1 or 2, characterized in that the aforesaid pivot axis (4) is located in the zone of connection between the side panel (2) and the roof (5) of the vehicle (1).

4. Device according to one of the foregoing claims, characterized in that the aforesaid pivoting means comprise means (9, 14) for the rigidification of the side panel (2) and of the roof (5) and a flexible connection (15) between the side panel (2) and the roof (5).

5. Device according to claim 4, characterized in that the aforesaid pivoting means moreover comprise a weakness zone (13) in the structure of the vehicle at the level of the lower portion of the side panel (2).

6. Device according to one of the foregoing claims, characterized in that the side panel (2) is intended to receive at least one door (8) of the vehicle (1) and in that the means for the rigidification of the side panel (2) comprise at least one reinforcing element (9, 10) of the door (8) such as a rigid brace (9) or frame (10).

7. Device according to claim 6 , characterized in that the door(s) (8) bear(s) upon a central foot (11) of the vehicle (1) and the means for the rigidification of the side panel (2) comprise a reinforcing element (12) of the central foot (11).

8. Device according to one of claims 4 to 7, characterized in that the means for the rigidification of the roof (8) comprise at least one cross member (14) connected to the latter.

9. Device according to claim 8, characterized in that one of the cross members (14) lies plumb with the central foot (11).

10. Device according to claim 9, characterized in that the cross member (14) is connected to the central foot (11) by a thinned zone (15) permitting their relative pivoting, thereby constituting the connection between the side panel (2) and the roof (5).

11. Device according to claim 5 and one of claims 7 to 10, characterized in that the weakness zone (13) comprises at least one zone of lesser strength (13) in the lower portion of the reinforcing element (12).

12. Device according to claim 11, characterized in that the zone of lesser strength comprises at least one cut-out or notch (13) in the lower portion of the reinforcing element (12).

## Patentansprüche

1. Vorrichtung zum Schutz eines Insassen eines Kraftfahrzeugs im Falle eines Seitenaufpralls, wobei das Fahrzeug eine den Aufprall aufnehmende Seitenplatte (2) aufweist, deren eine Teil in der Höhe eines vorbestimmten Teiles des Körpers des Insassen gelegen ist, dadurch gekennzeichnet, daß sie Mittel (9, 10, 12, 13, 14, 15) umfaßt, um wenigstens den besagten Teil der Seitenplatte (2) um eine etwa waagrechte Axe (4) zum Zeitpunkt des Aufpralls zu verschwenken.

2. Vorrichtung nach Anspruch 1, dadurch gekennzeichnet, daß der vorbestimmte Teil des Körpers des Insassen ein fester Teil desselben, wie das Becken ist.

3. Vorrichtung gemäß Anspruch 1 oder 2, dadurch gegkennzeichnet, daß die vorgenannte Schwenkachse (4) in dem Verbindungsbereich zwischen der Seitenplatte (2) und dem Dach (5) des Fahrzeugs (1) gelegen ist.

4. Vorrichtung nach einem der vorangehenden Ansprüche, dadurch gekennzeichnet, daß die vorgenannten Schwenkmittel Mittel (9, 14) zur Versteifung (9, 14) der Seitenplatte (2) und des Daches (5) und eine nachgiebige Verbindung (15) zwischen der Seitenplatte (2) und dem Dach (5) aufweisen.

5. Vorrichtung nach Anspruch 4, dadurch gekennzeichnet, daß die vorgenannten Schwenkmittel einen abgeschwächten Bereich (13) in dem Aufbau des Fahrzeugs in der Höhe des unteren Teiles der Seitenplatte (2) aufweisen.

6. Vorrichtung nach einem der vorangehenden Ansprüche, dadurch gekennzeichnet, daß die Seitenplatte (2) bestimmt ist, wenigstens eine Tür (8) das Fahrzeugs (1) aufzunehmen und daß die Mittel zur Versteifung der Seitenplatte (2) wenigstens ein Verstärkungselement (9, 10) der Tür (8), wie eine steife Strebe (9) oder einen steifen Rahmen (10) umfassen.

7. Vorrichtung gemäß Anspruch 6, dadurch gekennzeichnet, daß die Tür bzw. Türen (8) sich an einem zentralen Fuß (11) des Fahrzeugs (1) abstützt bzw. abstützen und die Mittel zur Versteifung der Seitenplatte (2) ein Verstärkungselement (12) des zentralen Fußes (11) umfassen.

8. Vorrichtung nach einem der Ansprüche 4 bis 7, dadurch gekennzeichnet, daß die Mittel zur Versteifung des Daches (5) wenigstens einen mit diesem verbundenen Querträger (14) aufweisen.

9. Vorrichtung nach Anspruch 8, dadurch gekennzeichnet, daß der eine der Querträger (14) sich über dem zentralen Fuß (11) befindet.

10. Vorrichtung gemäß Anspruch 9, dadurch gekennzeichnet, daß der Querträger (14) mit dem zentralen Fuß (11) durch einen deren relative Verschwenkung gestattenden und somit die Verbindung zwischen der Seitenplatte (2) und dem Dach (5) bildenden verdünnten Bereich (15) verbunden ist.

11. Vorrichtung nach Anspruch 5 und einem der Ansprüche 7 bis 10, dadurch gekennzeichnet, daß der abgeschwächte Bereich (13) wenigstens einen Bereich kleinerer Festigkeit (13) in dem unteren Teil des Verstärkungselementes (12) umfaßt.

12. Vorrichtung nach Anspruch 11, dadurch gekennzeichnet, daß der Bereich geringerer Festigkeit wenigstens einen Ausschnitt bzw. eine Kerbe (13) in dem unteren Teil des Verstärkungselementes (12) umfaßt.
